# EUROPEAN PATENT SPECIFICATION

(11) **EP 0 522 783 B1**
(45) Date of publication and mention of the grant of the patent: **01.02.1995**
(21) Application number: 92306074.3
(22) Date of filing: 01.07.1992
(51) Int. Cl.: B62B 7/14, B62B 7/10

(54) **Pushchair**
Kinderwagen
Poussette d'enfant

(30) Priority: 09.07.1991 GB 9114794
(43) Date of publication of application: 13.01.1993
(73) Proprietor: BRITAX-TEUTONIA Kinderwagenfabrik GmbH, D-32112 Hiddenhausen (DE)
(72) Inventor: Goetting, Bernd, W-4904 Enger (DE)
(74) Representative: Hollinghurst, Antony

(56) References cited:
- FR-A- 982 887
- GB-A- 1 477 274
- US-A- 2 842 374
- US-A- 3 425 709

## Description

This invention relates to a pushchair of the type having a folding chassis, a seat body mounted on the chassis for angular movement between a forward facing position and a rearward facing position, and a handle connected to the chassis, the seat body being mounted on the chassis by mounting means permitting relative angular movement between the seat body and the chassis about a vertical axis and the handle is pivotally connected to the chassis below the seat body.

A pushchair of this type is disclosed in GB-A-1477274. The handle and the backrest of the seat body can be folded but there is no provision for folding the mounting means for the seat relative to the chassis.

According to the invention, in a pushchair of the type described above, the chassis includes a pair of side members, each extending between a front axle and a rear axle and a pair of mutually parallel support legs are pivotally coupled at their lower ends to each side member and at their upper ends to the mounting means so as to form a parallelogram, a link extending between a point on one leg below the mounting means and the handle so that, when the handle is pivoted relative to the side members, the mounting means folds down towards the side members.

Preferred embodiments are specified in the dependent claims.

FR-A-982887 discloses a pushchair having a chassis which includes a pair of mutually parallel support legs are pivotally coupled at their upper ends to a seat body. A link extends between the top of one of the legs and the pushchair handle. This link would prevent angular movement of the seat body about a vertical axis.

An embodiment of the invention will now be described, by way of example, with reference to the accompanying drawings, in which:
Figure 1 is a side perspective view of a pushchair in accordance with the invention;
Figure 2 is a side perspective view corresponding to Figure 1 of the pushchair chassis without the seat body;
Figure 3 is a plan view from below of the chassis shown in Figure 1 in the fully folded condition;
Figures 4, 5 and 6 are schematic side views of the pushchair shown in Figure 1 in a fully erect position, in a partially folded position and in a fully folded position respectively;
Figure 7 is a side perspective view, similar to Figure 1 but with the pushchair body facing rearwardly; and
Figure 8 is a side perspective view, similar to Figures 1 and 7 but showing the pushchair body facing forwardly and to one side.

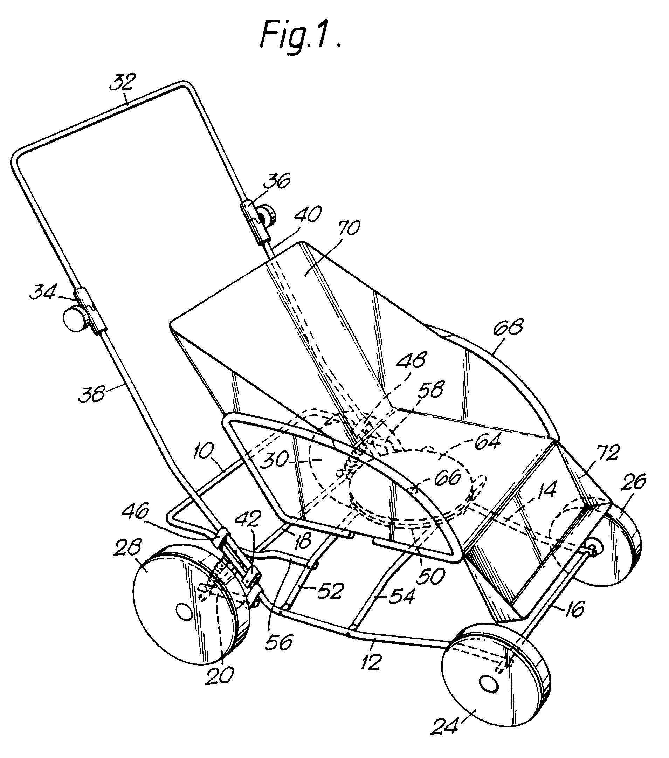

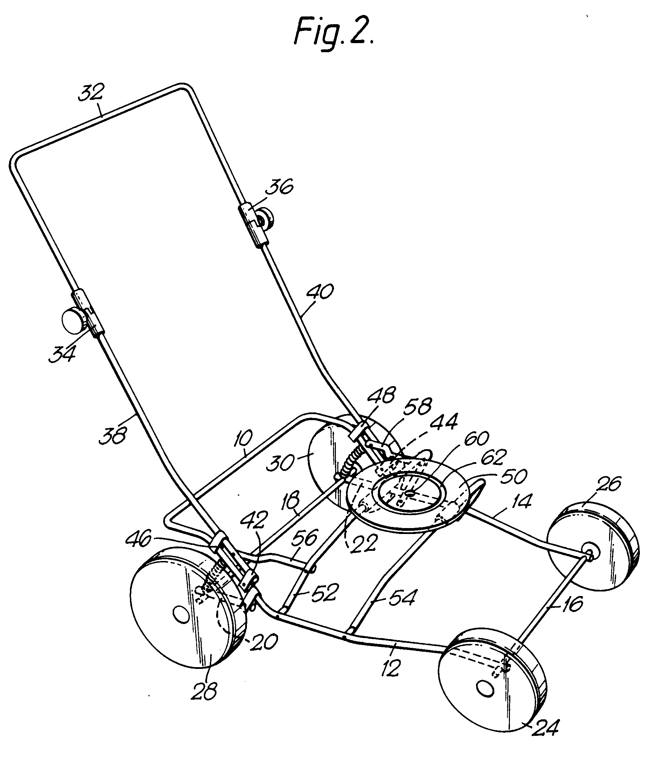

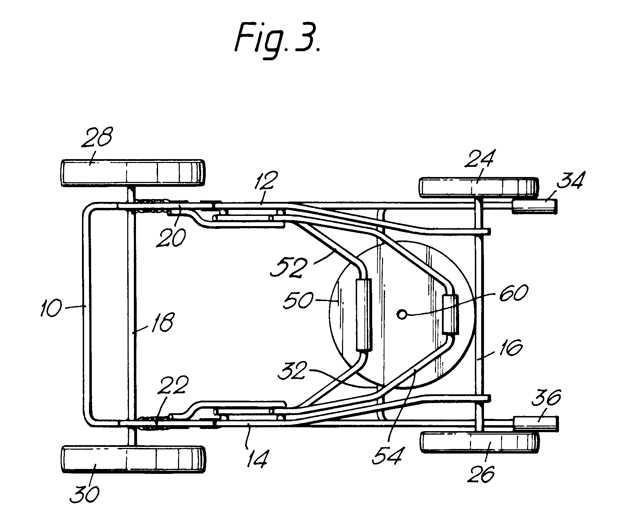

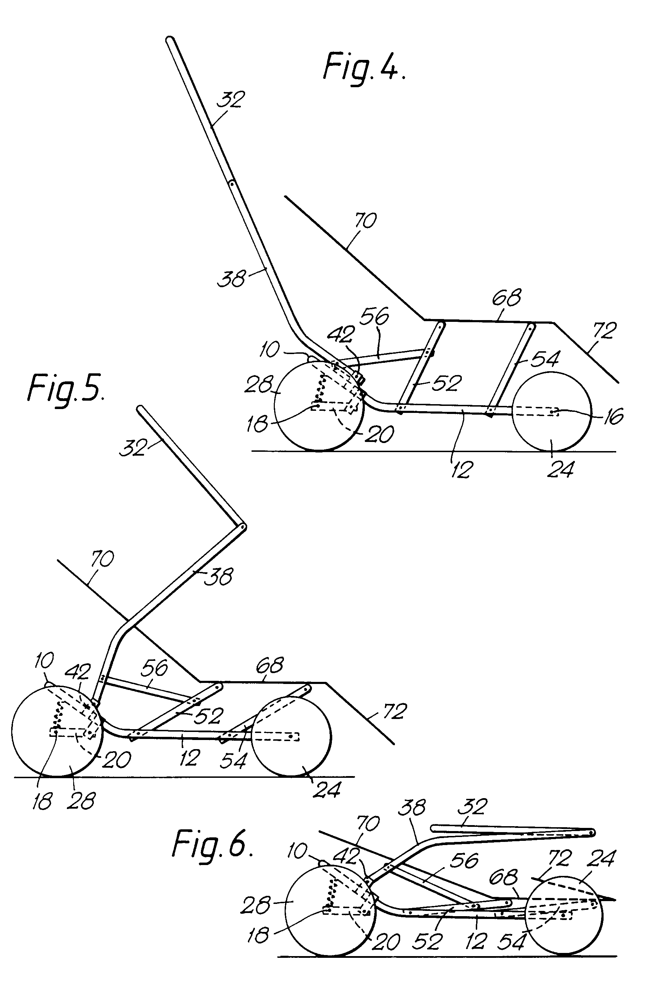

Referring to Figures 1 and 2, a pushchair chassis comprises a U-shaped base member 10 having the front ends of its side limbs 12 and 14 interconnected by a front axle 16. At the rear end of the pushchair, the two side limbs 12 and 14 are bent upwardly. A rear axle 18 is supported below these upwardly bent ends on sprung trailing arms 20 and 22 (see Figures 3 and 4). A pair of front wheels 24 and 26 are mounted on the front axle 16 and a pair of rear wheels 28 and 30 are mounted on the rear axle 18.

A pushchair handle comprises an upper U-shaped portion 32 having its ends connected by respective locking pivot joints 34 and 36 to lower portions 38 and 40. The bottom ends of the lower portions 38 and 40 are connected by respective pivot joints 42 and 44 to the upturned rear portions of the side limbs 12 and 14 of the base member 10. Releasable clips 46 and 48 secure the lower portions 38 and 40 in their erect positions as illustrated. The clips 46 and 48 are of conventional design and will not be described in detail.

In accordance with the invention, a circular platform 50 is pivotally coupled to the central portions of two U-shaped support members 52 and 54. The ends of the limbs of the U-shaped members 52 and 54 are pivotally connected to the horizontal portions of the limbs 12 and 14 of the base member 10 so as to form a parallelogram-type assembly which retains the platform 50 parallel to the side limbs 12 and 14. Respective support links 56 and 58 are pivotally connected at their front ends to the rear U-shaped member 52 and at their rear ends to the lower portions 38 and 40 of the handle.

As can best be seen in Figure 2, the platform 50 has a central hole 60 surrounded by an annular groove 62. Referring to Figure 1, a turntable 64 is secured to the platform 50 by a bolt 66 which projects through the hole 60. The turntable 64 has an annular rib (not shown) which engages in the annular groove 62. A pushchair body, consisting of two side frame members 68, is mounted on the turntable 64. The pushchair body has a backrest portion 70 and a footrest 72, the orientation of which relative to the side frame 68 is adjustable. The detailed construction of the pushchair body is conventional and will not be described in detail.

Referring particularly to Figures 4, 5 and 6, when the pushchair is to be folded, the clips 46 and 48 (Figure 1) are released and the handle pivoted forwardly from the position shown in Figure 4 to be the position shown in Figure 5. The footrest 72 is folded inwardly and forward folding movement of the handle continues until the lower parts 38 and 40 reach the position illustrated in Figure 6. The upper part 32 is then folded back so as to overlie the lower portions 38 and 40. There is no need to adjust the orientation of the backrest 70 because it remains within the overall zone bounded by the outer edges of the front and rear wheels 24 and 28.

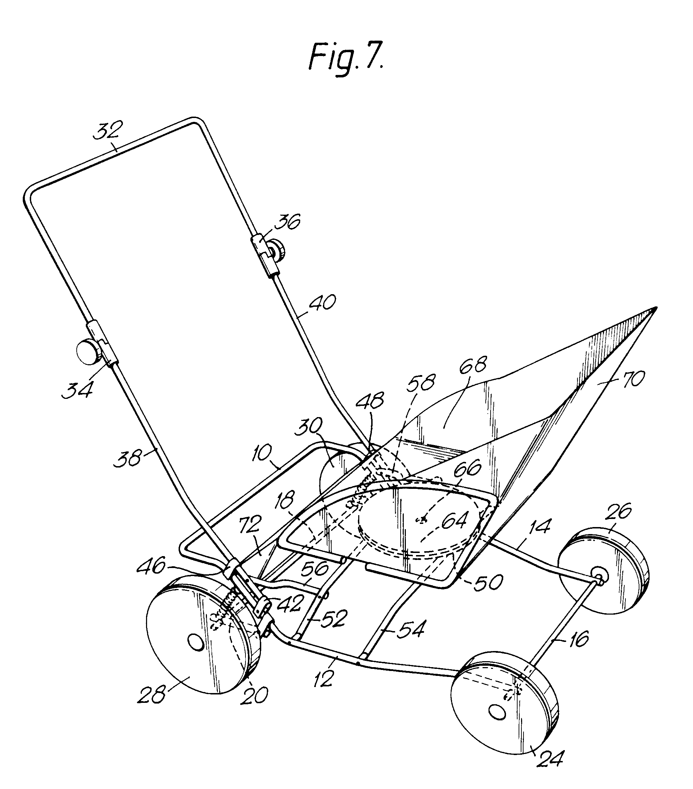

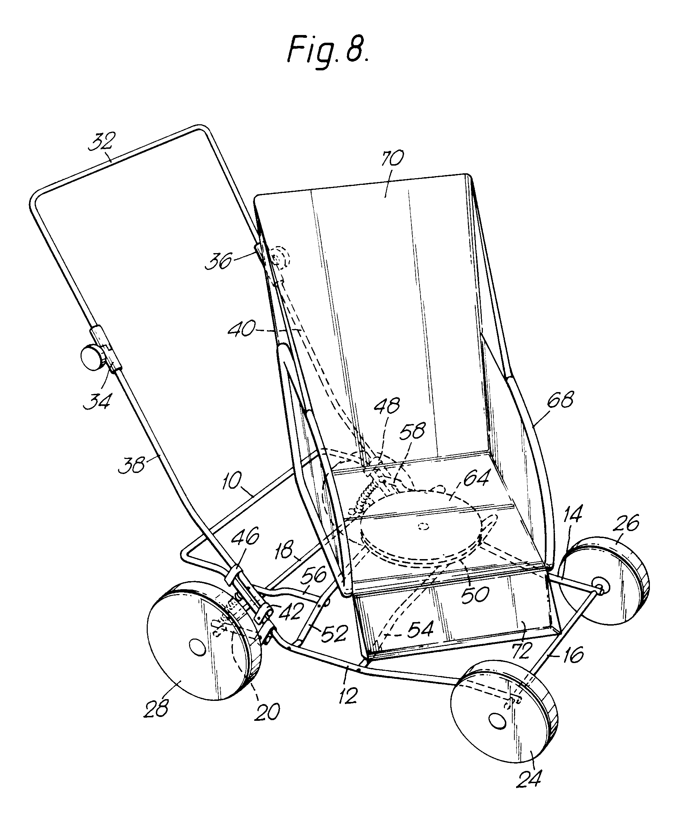

Referring to Figure 7, the pushchair body 68 may be pivoted with the turntable 50 to a rearward facing position, It may also be pivoted to any intermediate positions, for example, the forward inclined sideways position illustrated in Figure 8. This position is particularly useful when visiting zoos and similar places of interest.

Locking means (not shown) are provided for securing the turntable 64 in any of a multiplicity of desired orientations relative to the circular platform 50.

## Claims

1. A pushchair having a folding chassis (10, 52, 54), a seat body (68, 70) mounted on the chassis (10, 52, 54) for angular movement between a forward facing position and a rearward facing position, and a handle (38) connected to the chassis, the seat body (68, 70) being mounted on the chassis (10, 52, 54) by mounting means (50) permitting relative angular movement between the seat body (68, 70) and the chassis (10, 52, 54) about a vertical axis (60) and the handle (38) is pivotally connected to the chassis (10, 52, 54) below the seat body (68, 70), characterised in that the chassis includes a pair of side members (10), each extending between a front axle (16) and a rear axle (18) and a pair of mutually parallel support legs (52, 54) are pivotally coupled at their lower ends to each side member (10) and at their upper ends to the mounting means (50) so as to form a parallelogram, a link (56) extending between a point on one leg (52) below the mounting means (50) and the handle (38) so that, when the handle (38) is pivoted relative to the side members (10), the mounting means (50) folds down towards the side members (10).

2. A pushchair according to claim 1, wherein the seat body (68, 70) includes a footrest (72) and the link (56) is below the footrest (72).

3. A pushchair according to claim 1 or 2, wherein the mounting means comprises a circular platform (50) mounted on the chassis and a turntable (64) mounted on the circular platform (50) for angular movement about said vertical axis, the seat body (68, 70) being secured to the turntable (64).

4. A pushchair according to claim 3, wherein the upper surface of the platform (50) has an annular groove (62) for receiving an annular rib on the lower surface of the turntable (64).

## Patentansprüche

1. Ein Kinderwagen mit einem zusammenklappbaren Fahrgestell (10, 52, 54), einem Sitzkörper (68, 70), der auf dem Fahrgestell (10, 52, 54) zum Zwecke einer Winkelbewegung zwischen einer nach vorwärts weisenden Stellung und einer nach rückwärts weisenden Stellung angeordnet ist, und mit einer Handhabe (38), die mit dem Fahrgestell verbunden ist, wobei der Sitzkörper (68, 70) durch Befestigungsmittel (50) an dem Fahrgestell (10, 52, 54) angebracht ist, welche eine relative Winkelbewegung zwischen dem Sitzkörper (68, 70) und dem Fahrgestell (10, 42 und 44) um eine vertikale Achse (60) erlauben, und wobei die Handhabe (38) in schwenkbarer Weise unterhalb des Sitz-Körpers (68, 70) mit dem Fahrgestell (10, 52, 54) verbunden ist,
**dadurch gekennzeichnet**,
daß das Fahrgestell ein Paar von seitlichen Elementen (10) umfaßt, von denen sich jedes zwischen einer Vorderachse (16) und einer Hinterachse (18) erstreckt, und daß ein Paar von zueinander parallelen Trägerschenkeln (52, 54) in dreh- oder schwenkbarer Weise an ihren unteren Enden mit einem jeden seitlichen Element (10) und an ihren oberen Enden mit den Befestigungsmitteln (50) verbunden ist, so daß ein Parallelogramm gebildet wird, wobei sich eine Verbindungsstange (56) zwischen einem Punkt an dem einen Schenkel (52) unterhalb der Befestigungsmittel (50) und der Handhabe (38) erstreckt, so daß, wenn die Handhabe (38) relativ zu den seitlichen Elementen (10) verschwenkt wird, sich die Befestigungsmittel (50) in Richtung zu den seitlichen Elementen (10) hin herunterklappen.

2. Ein Kinderwagen gemäß Anspruch 1, bei welchem der Sitz-Körper (68, 70) eine Fußstütze (72) aufweist und die Verbindungsstange (56) sich unterhalb der Fußstütze (72) befindet.

3. Ein Kinderwagen gemäß Anspruch 1 oder 2, bei welchem die Befestigungsmittel eine kreisförmige Plattform (50), die auf dem Fahrgestell angebracht ist, und eine Drehscheibe (64) aufweisen, die auf der kreisförmigen Plattform (50) zum Zwecke einer Winkelbewegung um die genannte vertikale Achse angebracht ist, wobei der Sitzkörper (68, 70) mit der Drehscheibe (64) befestigt ist.

4. Ein Kinderwagen gemäß Anspruch 3, bei welchem die obere Oberfläche der Plattform (50) eine ringförmige Nut (62) zum Aufnehmen einer ringförmigen Rippe an der unteren Oberfläche der Drehscheibe (64) aufweist.

## Revendications

1. Poussette d'enfant comportant un châssis pliant (10, 52, 54), un corps de siège (68, 70) monté sur le châssis (10, 52, 54) avec faculté de déplacement angulaire entre une position tournée vers l'avant et une position tournée vers l'arrière, et une poignée (38) reliée au châssis, le corps de siège (68, 70) étant monté sur le châssis (10, 52, 54) à l'aide d'un moyen de montage (50) autorisant un mouvement angulaire relatif entre le corps de siège (68, 70) et le châssis (10, 52, 54) autour d'un axe vertical (60) et la poignée (38) étant reliée à pivotement au châssis (10, 52, 54) au-dessous du corps de siège (68, 70), caractérisée en ce que le châssis comprend deux éléments latéraux (10) s'étendant chacun entre un essieu avant (16) et un essieu arrière (18) et deux jambes de support mutuellement parallèles (52, 54) qui sont accouplées à pivotement, à leurs extrémités inférieures, à chaque élément latéral (10) et, à leurs extremités supérieures, au moyen de montage (50), de manière à former un parallélogramme, une biellette (56) s'étendant entre un point d'une jambe (52), au-dessous du moyen de montage (50), et la poignée (38) de sorte que, lorsque l'on fait pivoter la poignée (38) par rapport aux éléments latéraux (10), le moyen de montage (50) se replie vers le bas en direction des éléments latéraux (10).

2. Poussette d'enfant selon la revendication 1, dans laquelle le corps de siège (68, 70) comprend un repose-pied (72) et la biellette (56) est située au-dessous du reposepied (72).

3. Poussette d'enfant selon la revendication 1 ou 2, dans laquelle le moyen de montage comprend une plate-forme circulaire (50) montée sur le châssis et un plateau tournant (64) monté sur la plate-forme circulaire (50) avec faculté de déplacement angulaire autour dudit axe vertical, le corps de siège (68, 70) étant fixé au plateau tournant (64).

4. Poussette d'enfant selon la revendication 3, dans laquelle la surface supérieure de la plate-forme (50) comporte une gorge annulaire (62) destinée à recevoir une nervure annulaire ménagée sur la surface inférieure du plateau tournant (64).
